# EUROPEAN PATENT APPLICATION

(11) **EP 3 839 361 A1**
(43) Date of publication of application: **23.06.2021**
(21) Application number: 20214662.7
(22) Date of filing: 16.12.2020
(51) Int. Cl.: F24F 3/16, F24F 12/00, F24F 11/75

(54) **BUILDING WITH DEMAND-CONTROLLED HEAT EXCHANGE SYSTEM FOR VENTILATION, HEAT EXCHANGE VENTILATION SYSTEM AND HEAT EXCHANGE SYSTEM**

(30) Priority: 17.12.2019 NL 2024479
(71) Applicant: Vero Duco N.V., 8630 Veurne (BE)
(72) Inventor: VERCOUTTER, Miguel Gabriel Roger, 8630 Veurne (BE); TYVAERT, Jurgen, 8400 Oostende (BE)
(74) Representative: Nederlandsch Octrooibureau

(57) **Abstract**

The invention relates to a filter element for a heat exchange system, said filter element being provided at an interface between an inlet branch of the heat exchange system via which an air stream is supplied and an airflow passage through a heat exchanger of the heat exchange system. The filter element comprises air filtering and distribution means for filtering the supplied air stream and distributing the supplied air stream over the area of the interface. The air filtering and distribution means has a corrugated, oblong shape having peaks and valleys extending in a longitudinal direction of the filter element, such as a first filtering material pleated in fanfold manner having longitudinal pleats.

## Description

### Field of the Invention

The present invention relates to a filter element for a heat exchange or energy recovery system of a ventilating system in a building. The present invention further relates to a ventilation system or a building comprising such a heat exchange system.

### Background

For many years now, ventilation has been used to recover heat from air extracted from a room of a building by transferring heat from the extract air, ETA, to outdoor air, ODA, entering the building. Such ventilation systems typically comprise a heat exchanger at a crossing point of a first and second air passageway, each having an inlet and outlet, such that the first and second air passageway are in a heat-exchanging relationship to each other.

In urban areas, the price per m² of habitable surface is already high and will only increase over time. Every resident of such a household wants to efficiently use the available space in the home that he or she owns or rents. Therefore, there is a demand to make the technical installations, that ensure the comfort in that home and, that take up part of the available space more compact while maintaining a similar or improved performance, compared to the known systems.

One solution to maintain or increase the performance is to install a larger heat exchanger. However, this is detrimental to the compactness of the device and hence to the available space in the building.

### Object of the Invention

An object of the invention may be to provide a compacter heat exchange system while maintaining a similar or improved performance, compared to the known heat exchange systems.

Another object of the invention may be to provide an improved heat exchange system which has an improved heat transfer between the extracted air and the outdoor air.

Yet another object of the invention may be to provide an improved heat exchange system which has an improved air distribution over a heat-exchanging element of the heat exchanger.

### Summary of the Invention

In a first aspect of this invention, the invention relates to a filter element for a heat exchange system, said filter element being provided at an interface between an inlet branch of the heat exchange system via which an air stream is supplied and an airflow passage through a heat exchanger of the heat exchange system. The filter element comprises air filtering and distribution means for filtering the supplied air stream and distributing the supplied air stream over the area of the interface. The air filtering and distribution means has a corrugated, oblong shape having peaks and valleys extending in a longitudinal direction of the filter element, such as a first filtering material pleated in fanfold manner having longitudinal pleats, and is further called 'horizontal' filter. In other words, each peak or valley extends in the longitudinal direction of the filter element. Advantageously, horizontal filter leads to better heat exchange efficiency compared to known filtering elements, using filter mousses or 'vertical' filters as shown in Figure 2 and known from patent document KR 2008 0035900 A. Because the direction of the peaks and valleys coincide with the longitudinal direction, contrary to the 'vertical' filter having peaks and valleys extend in the lateral direction, a positive direction of flow to the air is provided such that the air is better distributed over the length or area of the interface and thus the heat exchanger. In particular, when the inlet branch directs the flow of air to one side of the filter element, the horizontal filter directs the air towards the other side of the device. This ensures a better air distribution over the heat exchanger and consequently a better heat-exchanging efficiency. Moreover, the improved air distribution lowers the resistance across the heat exchanger, which in turn leads to a lower pressure drop across the heat exchanger. The air can flow more easily through the heat exchanger, so the fan that draws in the air absorbs less electrical power.

In a second aspect of this invention, optionally in combination with the other aspects described herein, the air filtering and distribution means comprises a first portion comprising a first filtering material and a second portion comprising a second filtering material, wherein the first filtering material has a higher initial air flow resistance compared to the second filtering material, wherein the first portion is provided for being positioned in the heat exchange system to receive a main part of the supplied air stream, and wherein the second portion extends sideways from the first portion such that, in use, the main part of the supplied air stream engages with the first portion and is distributed over the area of the interface as a result of the difference in initial air flow resistance.

In an embodiment of the invention, the filter element has an oblong shape with the first portion being located at one end and the second portion being located at the other end. In another embodiment of the invention, the first portion is a central portion and the second portion extends sideways around the first portion.

In embodiments according to the invention, the initial air flow resistance of the first portion is in the range of 100 to 110 Pa, wherein the initial air flow resistance of the second portion is in the range of 5 to 10 Pa . In embodiments according to the invention, wherein the first portion occupies 30 to 50 % of the area of the interface and wherein the second portion occupies 50 to 70 % of the area of the interface. The first filter material and the second filter material may be made in accordance with the at least one standard of the group consisting of ISO 16890-1, ISO 16890-2, ISO 16890-3 and ISO 16890-4.

In another aspect of the invention, there is provided a heat exchange system, comprising a heat exchanger comprising an airflow passage, an inlet branch via which an air stream is supplied to the airflow passage, and a filter element, preferably as described above, placed at an interface between the inlet branch and the airflow passage with the first portion being positioned to receive a main part of the supplied air stream. The filter element comprises air filtering and distribution means for filtering the supplied air stream and distributing the supplied air stream over the area of the interface. The air filtering and distribution means has a corrugated, oblong shape having peaks and valleys extending in a longitudinal direction of the filter element.

In an embodiments according to the invention, the heat exchange system comprises a housing which contains:
the heat exchanger by means of which a first airflow passage and a second airflow passage are in a heat-exchanging relationship to each other, said first airflow passage comprising a first inlet branch at one end of the first flow passage and a first outlet branch at the other end of the first flow passage, said second airflow passage comprising a second inlet branch at one end of the second flow passage and a second outlet branch at the other end of the second flow passage,
a first inlet connection at one end of the first inlet branch, at the other end of which first inlet branch the heat exchanger is located;
   a first outlet connection at one end of the first outlet branch, at the other end of which first outlet branch the heat exchanger is located;
   a second inlet connection at one end of the second inlet branch, at the other end of which second inlet branch the heat exchanger is located; and
   a second outlet connection at one end of the second outlet branch, at the other end of which second outlet branch the heat exchanger is located,
a first booster for ensuring the flow of air through the first airflow passage , wherein the first booster ensures the flow of air from the first outlet connection via the heat exchanger to the first outlet connection; and
   a second booster for ensuring the flow of air through the second airflow passage, wherein the second booster ensures the flow of air from the second outlet connection via the heat exchanger to the first outlet connection.

In some embodiments, the first airflow passage further comprises a first bypass branch which is adapted to bypass the heat exchanger, and a first bypass flow regulator is located in the first bypass branch, e.g. at one of the ends of the bypass branch. As such, the first bypass flow regulator may be used to divide the flow between the first main branch and the first bypass branch, and to control the amount of heat exchanged between the first and second main branch by adjusting the flow rate through the first main branch. For example, if the temperature for instance in a room, due to external uncontrolled influences, rises or lowers to an undesirable temperature and the outside temperature is at a more desirable temperature than the temperature at the first, then the first bypass branch may be used to at least partially bypass the heat exchanger in order to prevent the supply of air at an undesirable temperature. Advantageously, the temperature of the air to be supplied, SUP, may be effectively controlled and, when bypassing the heat exchanger, less power is required from the booster since the air does not have to be sucked through the heat exchanger.

In further embodiments, the second airflow passage further comprises a second bypass branch which is adapted to bypass the heat exchanger, and a second bypass flow regulator is located in of the second bypass branch, e.g. at one of the ends of the bypass branch. As a result of the above configuration, the first and second flow air passage are interchangeable. For example, the first airflow passage may be used for allowing the flow of air from inside to outside the building and optionally bypassing the heat exchanger using the first bypass branch, or the second airflow passage may be used for allowing the flow of air from inside to outside the building and optionally bypassing the heat exchanger using the second bypass branch.

Advantageously, by providing two bypass branches, the heat exchange system may be used in a left- or right-sided configuration without the need to rebuild or convert the system.

In a yet another aspect of the invention, there is provided a building comprising several rooms, a first air inlet duct and a second air outlet duct, a first air outlet duct and a second air inlet duct as well as a heat exchange system, preferably as described above. According to the building, the first air inlet duct being connected to the first air inlet connection of the heat exchange system and to a room, said second air inlet duct being connected to the second air inlet connection of the heat exchange system and to a room, the first air outlet duct is connected to the first air outlet connection and said second air outlet duct is connected to the second air outlet connection of the heat exchange system.

Further objectives, features and advantages of the heat exchange system according to the present invention will be apparent from the description below and the appended drawings. Objectives, features and advantages of the method of controlling described herein will also be apparent.

### Brief description of Drawings

The present invention will be explained in more detail below with reference to drawings in which illustrative embodiments thereof are shown. They are intended exclusively for illustrative purposes and not to restrict the inventive concept, which is defined by the appended claims.
Figures 1A and 1B show different cross-sections of a heat exchange system according to the invention;
Figure 2 shows a detail of a heat exchange system according to the state of the art;
Figures 3A and 3B show a detail of heat exchange systems according to the invention; and
Figure 4 shows a schematic view of a building with a heat exchange system according to the invention.

### Detailed Description of Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention may operate in other sequences than described or illustrated herein.

Furthermore, the various embodiments, although referred to as "preferred" are to be construed as exemplary manners in which the disclosure may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

Different aspects of the present invention will be described more fully hereinafter with reference to the enclosed drawings. The embodiments disclosed herein can, however, be realized in many different forms and should not be construed as being limited to the aspects set forth herein.

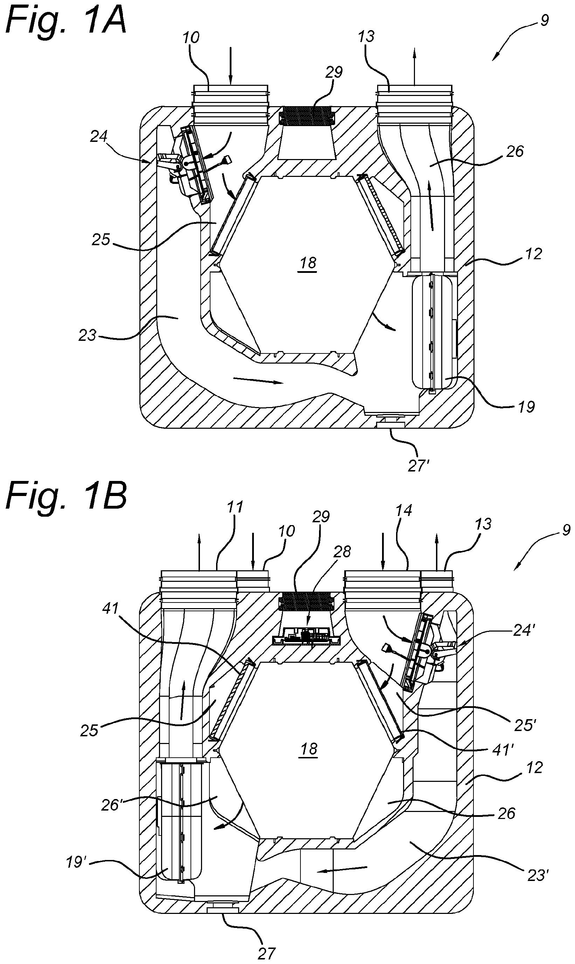

Figs. 1A and 1B show cross-sectional views of the heat exchange system 9. The heat exchange system 9 has a housing, designated as a whole as 12. The top side of the housing 12 is provided with a first air inlet connection 10 to which the first air inlet duct 4 is connectable and with a second air outlet connection 11 to which the second air outlet duct 3 is connectable. At the same side of the housing 12, a first outlet connection 13 and second air inlet connection 14 are provided. The first air outlet duct 7 is connectable to the first air outlet connection 13 and the second air inlet duct 8 is connectable to the second air inlet connection 14.
A first flow passage extends between the first air inlet connection 10 and the first air outlet connection 13. Correspondingly, a second flow passage extends between the second air inlet connection 14 and the second air outlet connection 11. A heat exchanger, designated as a whole as 18, is provided between said first flow passage and second flow passage. The heat exchanger 18 ensures that thermal energy is exchanged between the air, e.g. ODA/SUP, flowing in the first flow passage and the air, e.g. ETA/EHA, flowing in the second flow passage. The air flow is ensured by means of two boosters, the first booster 19 is placed in the first flow passage and the second booster 19' is placed in the second flow passage.

The first flow passage further comprises a first bypass branch 23 which is adapted to bypass the heat exchanger 18, and a first bypass flow regulator 24 which is located in the first bypass branch 23, i.e. at the end of the first bypass branch 23. Correspondingly, the second flow passage further comprises a second bypass branch 23' which is adapted to bypass the heat exchanger 18, and a second bypass flow regulator 24' which is located in the second bypass branch 23', i.e. at the end of the second bypass branch 23'.

As shown in Fig. 1A, the housing 12 is further provided with a first condensation drain 27, which is located at the side of the first air outlet connection 13, preferably at the side of the first booster 19. As shown in Fig. 1B, the housing 12 is further provided with a second condensation drain 27, which is located at the side of the second air outlet connection 11, preferably at the side of the second booster 19'.

As shown in Fig. 1B, the housing is provided with a control unit 28 configured to control the first and second bypass flow regulators, provided in the form of first and second bypass valves 24, 24', to regulate the flow through the respective bypass branch. For example, the control unit 28 may position the bypass valves in an open, closed or intermediate position. The control unit 28 may be electrically connected to the first and second bypass flow regulators 24, 24', wherein the control unit 28 transmits control signals to the first and second bypass flow regulators 24, 24'.

The control unit 28 is configured to adjust the heat exchange system 9 to a preferred configuration, i.e. at least a first and second configuration. In the first configuration of the heat exchange system, the first bypass flow regulator is maintained in a closed position in order to prevent the flow of air through the first bypass branch. In the second configuration of the heat exchange system the second bypass flow regulator is maintained in a closed position in order to prevent the flow of air through the second bypass branch. In the first and second configuration, the control unit 28 is adapted to control the respective other bypass flow regulator, i.e. the bypass flow regulator not maintained in a closed position, preferably based on a sensor measurement of for example a temperature, a pressure, or a particle size, or any other suitable parameter.

As shown in Figs. 1A and 1B, the housing 12 may further be provided with a user interface 29 configured to allow communication between a user and the control unit 28. The control unit 28 may be coupled to the user interface, which provides the control unit 28 with the ability to connect to mobile devices such as laptop computers, handheld computers, smart phones, etc. The control unit 28 may further be coupled to parts of the user interface, such as input and output means. The input means may be in the form of a keypad, touchscreen, button, or other inputting means capable of entering information to the control unit 28. The output may be a liquid crystal display, a light-emitting diode (LED) light or display, an optical LED (OLED), an active matrix OLED (AMOLED), or other output capable of rendering notifications, text and/or at least limited graphics from the control unit 28.

The user may through the user interface select between the first, second or other predetermined configurations of the heat exchange system 9. The control unit 28 is configured to receive a signal related to the selected configuration and adjust the heat exchange system 9 accordingly, by controlling the first and/or the second bypass flow regulators 24, 24'.

The user interface 29 may indicate the configuration to which the heat exchange system 9 is adjusted, particularly through the output, such as in the form of a notification, text, graphics, etc. The user interface may further indicate which one of the first and second condensation drains 27, 27' is to be used.

In embodiments according to the present invention, the control unit 28 may comprise a processing module (not shown) which is configured to gather one or more temperature measurements of the air flowing through the at least one of the first air inlet connection 10 and the second air inlet connection 14. The temperature of supplied air may be measured by one or more temperature sensors located at least in or at the end(s) of the first air outlet duct 7, the first air inlet connection 10, the first flow passage or the first air outlet connection 13, preferably the end(s) of the first air outlet duct 7 and/or the first air inlet connection 10. Correspondingly, the temperature of discharged air may be measured by one or more temperature sensors located at least in or at the end(s) of the second air inlet duct 8, the second air inlet connection 14, the second flow passage or the second air outlet connection 11, preferably the end(s) of the second air inlet duct 8 and/or the second air inlet connection 14.

In embodiments according to the present invention, the processing module may be further configured to gather one or more humidity measurements of the air flowing via the first and second flow passages. The humidity of supplied air may be measured by one or more humidity sensors located at similar locations to the one or more temperature sensors used for measuring temperature of the supplied air, preferably the one or more humidity sensors are located at least at the site of the first condensation drain 27. Correspondingly, the humidity of discharged air may be measured by one or more humidity sensors located at similar locations to the one or more temperature sensors used for measuring temperature of the discharged air, preferably the one or more humidity sensors are located at least at the site of the second condensation drain 27'.

These one or more temperature and/or humidity measurements may be stored in a memory module. The processing module may gather the one or more temperature and/or humidity measurements from the one or more sensors and/or the memory module. The processing module may further compute a first average temperature and/or humidity from the one or more temperature and/or humidity measurements of the supplied air and/or a second average temperature and/or humidity from the one or more temperature and/or humidity measurements of the discharged air.

The memory module may store data or commands received from or generated by the processing module or the user interface. The memory module may include an internal memory or an external memory. The internal memory may include, for example, at least one of a volatile memory (for example, a Random Access Memory (RAM), a dynamic RAM (DRAM), a static RAM (SRAM), a synchronous dynamic RAM (SDRAM), and the like), and a non-volatile Memory (for example, a Read Only Memory (ROM), a one-time programmable ROM (OTPROM), a (electrically erasable and) programmable ROM (PROM), a flash memory, and the like). The external memory may include a flash drive, for example, a Compact Flash (CF), a Secure Digital (SD) a Micro Secure Digital (Micro-SD), a Mini Secure Digital (Mini-SD), an extreme Digital (xD), a memory stick or a storage medium (e.g. a hard drive). The external memory may be functionally connected to the control unit 28 through the user interface or other connecting interfaces.

The processing module may be further configured to determine whether each of the one or more temperature measurements or the average temperatures pass a predefined threshold. The processing module is further configured to, upon determining that the each of the one or more temperature measurements and/or the average temperatures pass the predefined threshold, send signals to the control unit 28 to perform an (in)action, which may be to at least partially open or close the first or second bypass flow regulators 24, 24'.

The step of determining whether each of the one or more temperature measurements and/or the average temperatures pass a predefined threshold may comprise computing a percentage difference between the predefined threshold and the one or more temperature measurements or the average temperatures. Furthermore, the control unit 28 may perform the (in)action directly related to the computed percentage difference. For example, a margin of 5% above or below the predefined threshold may be set to slightly open or close the first or second bypass flow regulator 24, 24', and a margin of 10% above or below the predefined threshold may be set to greatly open or close the first or second bypass flow regulator 24.

Furthermore, the processing module may be further configured to determine whether each of the one or more humidity measurements or the average humidity pass a predefined threshold. The processing module is further configured to, upon determining that the each of the one or more humidity measurements and/or the average humidity pass the predefined threshold, send signals to the control unit 28 to perform an (in)action, which may be to at least partially open or close the first or second drain regulators.

The one or more predefined thresholds may be stored in the memory module. The user may through the user interface select the one or more predefined thresholds. The user may further create a ventilation program for a pre-set period. Here the pre-set period may be hourly, daily, weekly, monthly, seasonally, and the like. For example, the user may set a higher temperature threshold for the winter season than for the summer season or the night than for the day.

In embodiments according to the invention, the housing 12 is provided with a filtering element for filtering air provided at an interface between an inlet branch of the heat exchange system via which an air stream is supplied and an airflow passage through a heat exchanger of the heat exchange system.

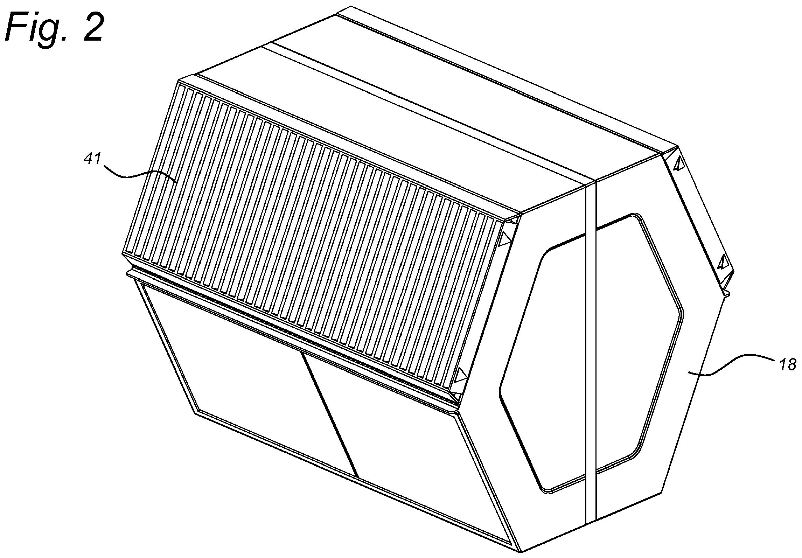

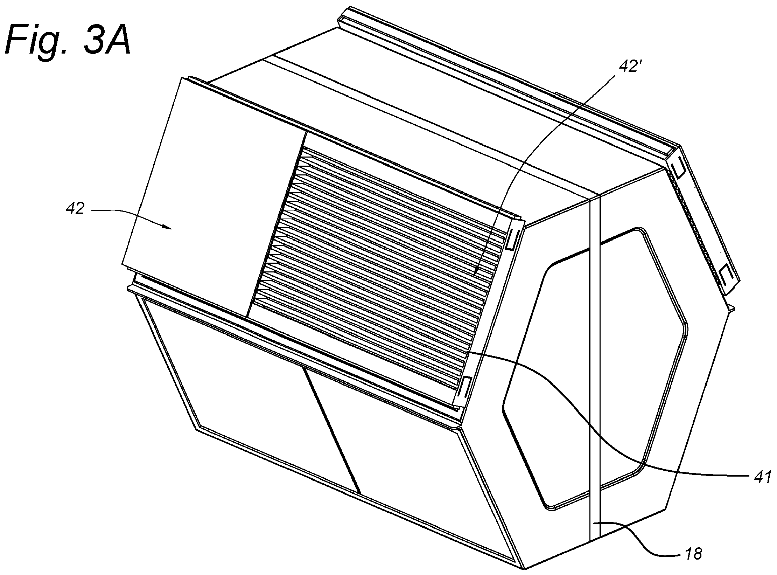

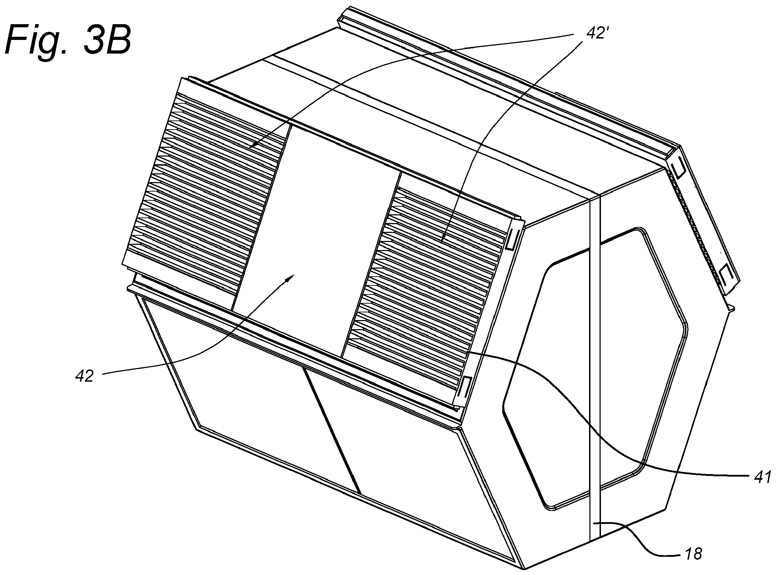

Figs. 2, 3A and 3B show an assembly of a heat exchanger 18 and a filter element 41 respectively according to the state of the art and according to the invention.

Figures 3A and 3B show assemblies of a heat exchanger 18 and an improved filter element 41. The filter element comprises air filtering and distribution means having a corrugated shape having peaks and valleys extending in a longitudinal direction of the filter element, and called a 'horizontal' filter. The air filtering and distribution means comprise at least one first portion 42 comprising a first filtering material and at least one second portion 42' comprising a second filtering material, wherein the first filtering material has a higher initial air flow resistance compared to the second filtering material, wherein the first portion 42 is provided for being positioned in the heat exchange system to receive a main part of the supplied air stream, and wherein the second portion 42' extends sideways from the first portion such that, in use, the main part of the supplied air stream engages with the first portion and is distributed over the area of the interface as a result of the difference in initial air flow resistance. In Figure 3A, the filter element has an oblong shape with the first portion 42 being located at one end and the second portion being located at the other end. In Figure 3B, the first portion 42 is a central portion and the second portion extends sideways around the first portion.

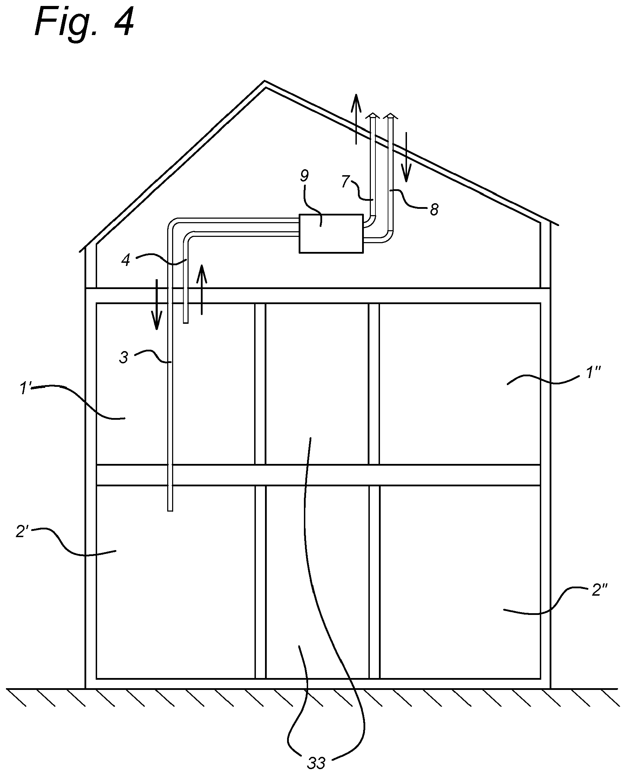

Fig. 4 shows a building comprising several, in this exemplary embodiment four, rooms 1', 1", 2', 2" and hall 33. The building further comprises a main air supply duct, provided in the form of a second air inlet duct 8, for supplying outdoor air, ODA, to an outdoor air connection of a heat exchange system 9 and a main air discharge duct, provided in the form of a first air outlet duct, for discharging exhaust air, EHA, from an exhaust air connection of the heat exchange system 9. In a first configuration of the heat exchange system 9, the outdoor air connection is provided in the form of the first air inlet connection 10 and the exhaust air connection is provided in the form of the second air outlet connection 11. In a second configuration of the heat exchange system 9, the outdoor air connection is provided in the form of the second air inlet connection 14 and the exhaust air connection is provided in the form of the first air outlet connection 13.
Furthermore, the building further comprises a secondary air supply duct, provided in the form of a second air outlet duct 3, for supplying supply air, SUP, from a supply air connection of the heat exchange system to a room 1', 1", 2', 2", and comprises a secondary air discharge duct, provided in the form of a first air inlet duct 4, for discharging extract air, ETA, from a room 1', 1", 2', 2" to an extract air connection of the heat exchange system. In embodiments, each one of the first and first air inlet ducts 3, 4 may be connected to one or more manifolds (not shown) to supply air to multiple rooms 1', 1", 2', 2" and/or further to a hall 33. Each of the one or more manifolds may be connected to at least two branches, wherein each branch is connected to a respective room or hall.
In the first configuration of the heat exchange system 9, the supply air connection is provided in the form of the first air outlet connection 13 and the extract air connection is provided in the form of the second air inlet connection 14. In the second configuration of the heat exchange system 9, the supply air connection is provided in the form of the second air outlet connection 11 and the extract air connection is provided in the form of the first air inlet connection 10.

Other alternatives and equivalent embodiments of the present invention are conceivable within the idea of the invention, as will be clear to the person skilled in the art. The scope of the invention is limited only by the appended claims.

### List of reference signs

- 1', 1", 2', 2".: Room
- 3, 7.: Air outlet duct
- 4, 8.: Air inlet duct
- 9.: Heat exchange system
- 10, 14.: Air inlet connection
- 11, 13.: Air outlet connection
- 12.: Housing of heat exchange system
- 18.: Heat exchanger
- 19.: First booster
- 19': Second booster

- 23, 23'.: Bypass branch
- 24, 24'.: Bypass flow regulator
- 25, 25'.: Inlet branch
- 26,26'.: Outlet branch

- 27, 27'.: Condensation drain
- 28.: Control unit
- 29.: User Interface
- 33.: Hall

- 41, 41'.: Filter element
- 42.: First portion
- 42': Second portion

## Claims

1. A filter element for a heat exchange system, the filter element being provided for placement at an interface between an inlet branch via which an air stream is supplied and an flow passage of a heat exchanger of the heat exchange system, the filter element comprising air filtering and distribution means for filtering the supplied air stream and distributing the supplied air stream over the area of the interface,
**characterised in, that** the air filtering and distribution means has a corrugated, oblong shape having peaks and valleys extending in a longitudinal direction of the filter element.

2. The filter element according to claim 1, wherein the air filtering and distribution means comprises a first portion comprising a first filtering material and a second portion comprising a second filtering material, wherein the first filtering material has a higher initial air flow resistance compared to the second filtering material, wherein the first portion is provided for being positioned in the heat exchange system to receive a main part of the supplied air stream, and wherein the second portion extends sideways from the first portion such that, in use, the main part of the supplied air stream engages with the first portion and is distributed over the area of the interface as a result of the difference in initial air flow resistance.

3. The filter element according to claim 2, wherein the filter element has an oblong shape with the first portion being located at one end and the second portion being located at the other end.

4. The filter element according to claim 2, wherein the first portion is a central portion and the second portion extends sideways around the first portion.

5. The filter element according to any one of the claims 2-4, wherein the ratio of the initial air flow resistance of the first portion and the initial air flow resistance of the second portion is between about 5 and about 25, preferably between 10 and 22, more preferably around 21.

6. The filter element according to any one of the claims 2-5, wherein the first portion occupies 30 to 50 % of the area of the interface and wherein the second portion occupies 50 to 70 % of the area of the interface.

7. A heat exchange system, comprising:
a heat exchanger comprising an airflow passage;
an inlet branch via which an air stream is supplied to the airflow passage; and
a filter element, preferably according to any one of the preceding claims, placed at an interface between the inlet branch and the airflow passage with the first portion being positioned to receive a main part of the supplied air stream,
wherein the filter element comprises air filtering and distribution means for filtering the supplied air stream and distributing the supplied air stream over the area of the interface,
**characterised in, that** the air filtering and distribution means has a corrugated, oblong shape having peaks and valleys extending in a longitudinal direction of the filter element.

8. A heat exchange system according to claim 7, wherein the inlet branch expands adjacent to the interface while the supplied air stream is mainly directed towards the first portion of the filtering element.

9. A heat exchange system according to claim 7 or claim 8, wherein the inlet branch expands laterally such that the inlet branch comprises a lateral expansion part with a wall which slopes/slants towards the edges of the interface.

10. Heat exchange system (9) according to any one of the claims 7-9, comprising a housing (12) which contains:
the heat exchanger (18) by means of which a first airflow passage and a second airflow passage are in a heat-exchanging relationship to each other, said first airflow passage comprising a first inlet branch (25) at one end of the first flow passage and a first outlet branch (26) at the other end of the first flow passage, said second airflow passage comprising a second inlet branch (25') at one end of the second flow passage and a second outlet branch (26') at the other end of the second flow passage,
a first inlet connection (10) at one end of the first inlet branch (25), at the other end of which first inlet branch (25) the heat exchanger (18) is located;
a first outlet connection (13) at one end of the first outlet branch (26), at the other end of which first outlet branch (26) the heat exchanger (18) is located;
a second inlet connection (14) at one end of the second inlet branch (25'), at the other end of which second inlet branch (25') the heat exchanger (18) is located; and
a second outlet connection (11) at one end of the second outlet branch (26'), at the other end of which second outlet branch (26') the heat exchanger (18) is located,
a first booster (19) for ensuring the flow of air through the first airflow passage, wherein the first booster (19) ensures the flow of air from the first inlet connection (10) via the heat exchanger (18) to the first outlet connection (13); and
a second booster (19') for ensuring the flow of air through the second airflow passage, wherein the second booster (19') ensures the flow of air from the second inlet connection (14) via the heat exchanger (18) to the first outlet connection (11).

11. Heat exchange system (9) according to claim 10,
wherein the first flow passage further comprises a first bypass branch (23) which is adapted to bypass the heat exchanger (18), and a first bypass flow regulator (24) which is located in the first bypass branch (23).

12. Heat exchange system (9) according to claims 10 or claim 11,
wherein the second flow passage (23') further comprises a second bypass branch (23') which is adapted to bypass the heat exchanger (18), and a second bypass flow regulator (24') which is located in the second bypass branch (23').

13. Building comprising several rooms (1, 2), a first air inlet duct (4) and a second air outlet duct (3), a first air outlet duct (7) and a second air inlet duct (8) as well as a heat exchange system (9), preferably according to any one of the claims 8 - 12, said heat exchange system comprising a housing (12) which contains:
a heat exchanger comprising an airflow passage;
an inlet branch via which an air stream is supplied to the airflow passage; and
a filter element, preferably according to any one of the preceding claims, placed at an interface between the inlet branch and the airflow passage with the first portion being positioned to receive a main part of the supplied air stream,
wherein the filter element comprises air filtering and distribution means for filtering the supplied air stream and distributing the supplied air stream over the area of the interface,
**characterised in, that** the air filtering and distribution means has a corrugated, oblong shape having peaks and valleys extending in a longitudinal direction of the filter element.

14. Building according to claim 13, said heat exchange system comprising a housing (12) which contains:
the heat exchanger (18) by means of which a first airflow passage and a second airflow passage are in a heat-exchanging relationship to each other, said first airflow passage comprising a first inlet branch (25) at one end of the first flow passage and a first outlet branch (26) at the other end of the first flow passage, said second airflow passage comprising a second inlet branch (25') at one end of the second flow passage and a second outlet branch (26') at the other end of the second flow passage,
a first inlet connection (10) at one end of the first inlet branch (25), at the other end of which first inlet branch (25) the heat exchanger (18) is located;
a first outlet connection (13) at one end of the first outlet branch (26), at the other end of which first outlet branch (26) the heat exchanger (18) is located;
a second inlet connection (14) at one end of the second inlet branch (25'), at the other end of which second inlet branch (25') the heat exchanger (18) is located; and
a second outlet connection (11) at one end of the second outlet branch (26'), at the other end of which second outlet branch (26') the heat exchanger (18) is located,
a first booster (19) for ensuring the flow of air through the first airflow passage, wherein the first booster (19) ensures the flow of air from the first inlet connection (10) via the heat exchanger (18) to the first outlet connection (13); and
a second booster (19') for ensuring the flow of air through the second airflow passage, wherein the second booster (19') ensures the flow of air from the second inlet connection (14) via the heat exchanger (18) to the first outlet connection (11),
said first air inlet duct (4) being connected to the first inlet connection (10) of the heat exchange system (9) and to a room (1'), said second air outlet duct (3) being connected to the second air outlet connection (11) of the heat exchange system (9) and to a room (2'), and
said first air outlet duct (7) being connected to the first air outlet connection (13) and said second air inlet duct (8) being connected to the second air outlet connection (14) of the heat exchange system (9).
